# NOUVEAU FASCICULE DE BREVET EUROPEEN

(11) **EP 2 407 319 B2**
(45) Date de publication et mention de la décision concernant l'opposition: **20.09.2017**
(45) Mention de la délivrance du brevet: 29.05.2013
(21) Numéro de dépôt: 11005331.1
(22) Date de dépôt: 30.06.2011
(51) Int. Cl.: B60B 5/02, B60B 21/06

(54) **Jante ou portion de jante réalisée en matériau composite**
Felge oder Felgenteil aus Verbundmaterial
Rim or rim portion made of a composite material

(30) Priorité: 13.07.2010 FR 1002960
(43) Date de publication de la demande: 18.01.2012
(73) Titulaire: MAVIC S.A.S., 74370 Metz-Tessy (FR)
(72) Inventeur: Mercat, Jean-Pierre, 74650 Chavanod (FR); Saillet, Benoît, 73410 Albens (FR)
(74) Mandataire: Rings, Rolf

(56) Documents cités:
- WO-A1-2008/116560
- DE-U1-202005 006 589
- US-A- 4 702 528
- US-A- 5 470 133
- US-A- 5 653 510
- US-A- 6 048 035
- US-A1- 2009 096 277
- US-B1- 6 398 313

## Description

L'invention concerne une jante ou une portion de jante réalisée en matériau composite.

Les jantes de vélo ont d'abord majoritairement fabriquées dans des matériaux métalliques comme l'acier et l'aluminium. Un procédé classique de fabrication d'une jante métallique est de procédé à la réalisation d'un profilé rectiligne, de le cintrer et d'en souder les deux extrémités pour la réalisation d'un anneau. Un tel procédé n'est possible que parce que les matériaux métalliques font preuve de suffisamment de ductilité.

Actuellement, on réalise également des jantes en matériau composite. Les jantes ou les portions de jante réalisées en matériau composite, sont très appréciées par les cyclistes pour le rapport rigidité/poids qu'elles offrent.

Les possibilités de choix matériaux et pour la fabrication de jante composite sont grandes. On peut par exemple utiliser des fibres de verre, de carbone, ou d'aramide, noyées dans une matrice pouvant être de type thermoplastique ou thermodurcissable. De plus, on peut choisir des fibres de différentes longueur, et agencées les uns avec les autres suivant différentes configurations.

Par exemple, une combinaison de fibres courtes au sein d'une matrice thermoplastique permettra la fabrication de jante par injection. Un tel procédé, ne permet pas la fabrication d'élément de jante ayant un très bon rapport rigidité/poids, notamment parce que les fibres utilisées doivent être très courtes et que le ratio de la quantité de fibres sur la quantité de matrice thermoplastique est trop faible pour profiter pleinement des avantages apportées par les fibres.

On pourrait également envisager l'utilisation de fibres tissées au sein d'une matrice thermoplastique pour permettre un procédé de fabrication analogue à celui utilisé pour les jantes métalliques. C'est-à-dire, réalisation d'une forme rectiligne qui est ensuite cintrée à chaud. Bien sûr, un tel procédé rend obligatoire l'utilisation de matrice thermoplastique. De plus, comme les fibres de verre ou de carbone ont un module très important et qu'elles ne peuvent pas s'étirer, un tel procédé rend également obligatoire une configuration particulière de l'orientation des fibres. Typiquement, il sera impossible de cintrer une pièce dont des fibres seraient placées dans une portion de ladite pièce et orientées selon une direction de la pièce correspondant à portion et à la direction d'allongement au cours du cintrage. De plus, la déformation d'une forme rectiligne jusqu'à l'obtention d'un anneau circulaire nécessitera que les fibres, non extensibles, soient en petite quantité par rapport à la quantité de matrice. Enfin, il est inenvisageable de réaliser par un tel procédé une jante ayant un profil creux.

On sait désormais que pour fabriquer une jante composite avec un très bon rapport rigidité/poids, il faut, de préférence, utiliser des fibres longues, en grande quantité, pouvoir les placer selon les toutes les directions, notamment selon une direction circonférentielle au sein d'une matrice thermodurcissable.

La fabrication de telles jantes est coûteuse du fait du coût des matériaux mais également du fait du temps important nécessaire à leur fabrication.

Le brevet US 6347839 décrit un procédé de fabrication d'une jante composite. La jante est constituée de vingt quatre couches contenant des fibres, en l'occurrence des fibres de verre. Les différentes couches imprégnées de résine époxy sont placées dans un moule les unes sur les autres, formant ainsi un tissu laminé. Après polymérisation de la résine, la jante est extraite du moule. On réalise avantageusement une jante en une seule partie, mais le procédé est long et il demande beaucoup de manipulation. De plus il est impossible d'automatiser la mise en place dans le moule des nombreuses couches, c'est pourquoi la présence d'un opérateur est nécessaire pendant tout le cycle de préparation d'une seule jante.

D'autre part, ce procédé rend impossible le moulage de pièce creuse comme peuvent l'être les jantes de vélo. Alors pour contourner cette difficulté, on utilise des noyaux internes en matériau très léger qui resteront en place une fois la jante fabriquée. Bien sûr une telle solution n'est pas optimale en termes de poids. D'autre part, pour éviter d'écraser le noyau qui est souvent en mousse, la pression d'injection de la résine est limitée. Une autre solution pour contourner cette difficulté consiste à réaliser la jante en plusieurs parties qui chacune sont des formes annulaires et ouvertes, lesquelles sont collées les unes avec les autres pour réaliser la jante finale. Cette solution est non seulement coûteuse en temps et en matériau, mais également peu performante car les jantes ainsi fabriquées sont plus lourdes.

Un autre procédé connu de réalisation d'une jante est l'utilisation d'une vessie gonflable. Ce procédé permet de se passer du noyau, mais reste un procédé long et couteux.

Un autre procédé est décrit dans la demande US 6398313 qui forme l'état de la technique le plus proche selon le préambule de la revendication 1. Dans ce procédé, la jante est constituée de deux demi-jantes, chacune d'elles constituant un tronçon d'arc angulaire de 180°. Chacun des tronçons est réalisé par moulage. Grâce à cette configuration en deux hémisphères, les portions fermées de la section de la jante sont désormais des parties creuses des tronçons, ouvertes aux deux extrémités de celui-ci. Pour le moulage, il est donc possible d'utiliser un noyau extractable plus dur et des pressions plus importantes sont possibles. Les deux jonctions entre les tronçons sont réalisées par la mise en place de manchons à l'intérieur de la jante. Du fait de la présence de ces deux manchons, cette technologie ne permet pas de réaliser des jantes au poids optimisé.

D'autre part, ce procédé reste un procédé long, coûteux. En effet, comme tous les procédés de moulage de structure composite composée de différentes couches, la mise en place des couches dans le moule génère une grande quantité de rebuts car les couches sont découpées dans des panneaux de tissus de taille normalisée avant d'être mises dans le moule. De plus, les procédés de moulage génèrent également des rebuts de résine difficilement recyclables car déjà polymérisés. On le voit donc, en plus des inconvénient liés au coût, au temps de fabrication, le moulage de jante en matériau composite pose également des problèmes environnementaux.

La présente invention a pour objectif de fournir une jante, ou de fournir une portion de jante, c'est-à-dire un élément rentrant dans la fabrication d'une telle jante, qui ne présente pas les inconvénients de l'art antérieur.

En particulier, la présente invention a pour objectif de réaliser une jante légère, robuste, comportant des matériaux composites, tels que tissus de fibres noyées dans une matrice en résine polymérisable. Ce problème est résolu par une jante selon la revendication 1 et par une méthode de fabrication selon la revendication 10.

L'objectif de l'invention est atteint par la fourniture d'une jante pour roue d'axe de rotation A comportant un premier élément ayant la forme d'un tronçon de solide de révolution d'axe A réalisé d'une seule pièce en matériaux composite et comportant une première extrémité et une deuxième extrémité distincte l'une de l'autre, caractérisé en ce que ledit premier élément constitue, entre la première et la deuxième extrémités, un tronçon de solide de révolution d'arc angulaire supérieur à 350° ; et en ce que ledit matériau composite composant le premier élément comprend des fibres noyées, les fibres constituant au moins 50 % du poids dudit premier élément.

Dans des modes de réalisation de l'invention préférés la jante comprend, outre les caractéristiques du paragraphe précédent, toute combinaison techniquement possible des caractéristiques listées ci-dessous :
- le matériau composite composant le premier élément comprend une matrice thermodurcissable,
- l'élément est réalisé par pultrusion,
- une des portions de section de la jante est une portion fermée,
- les moyens d'assemblage peuvent comprendre de la colle, un manchon inséré dans la portion de section fermée, une bande de renfort, une goupille,
- la jante comprend un deuxième élément ayant la forme d'un tronçon de solide de révolution d'axe A réalisé d'une seule pièce en matériaux composite dont une première et une deuxième extrémité distincte l'une de l'autre sont séparées d'un arc angulaire supérieur à 350°,
- la jante comprend un premier élément constituant un noyau réalisée par pultrusion et une peau structurelle recouvrant au moins partiellement ledit noyau.

La réalisation d'une jante comportant un tel élément, réalisé d'une seule pièce composite constituant la totalité, ou la quasi-totalité, de la circonférence de la jante, rend possible la fabrication à moindre coût d'une jante dont le rapport rigidité/poids est maximal. De plus, le choix d'un ratio fibres/résine, notamment fibres de carbone, supérieur à 50% accentue encore l'amélioration du rapport rigidité/poids.

L'objectif de l'invention est également atteint par la mise en oeuvre d'une méthode de fabrication d'une jante comprenant les étapes suivantes : Obtention par pultrusion d'au moins un élément ayant la forme d'un tronçon de solide de révolution d'axe A en matériau composite, ledit élément comprenant une première et une deuxième extrémité et constituant entre ces deux extrémités un tronçon de solide de révolution d'arc angulaire supérieur à 350° ; Préparation d'une ébauche de jante à partir d'au moins dudit élément, ladite étape de préparation pouvant comprendre des étapes supplémentaire d'usinage ; Préparation des moyens d'assemblage des deux extrémités de l'ébauche; Et assemblage des deux extrémités de l'ébauche.

Dans des modes de réalisation préférés de l'invention, la méthode peut inclure toute ou une partie des étapes listées ci-dessous :
- l'étape de préparation des moyens d'assemblage comprend la fabrication d'un manchon dans le cas où l'ébauche comprend un corps creux,
- l'étape de préparation des moyens d'assemblage comprend la préparation de renforts à placer sur les flancs latéraux de l'ébauche,
- l'assemblage des deux extrémités est réalisé par collage,
- l'assemblage des deux extrémités est réalisé par co-stratification,
- l'étape de préparation de l'ébauche comprend une étape d'usinage du pont inférieur dans les zones comprises entre les points d'ancrage des rayons,
- l'étape de préparation de l'ébauche comprend une étape de perçage des crochets pour la mise en plage de goupilles.
- l'étape de préparation de l'ébauche comprend une étape de renforcement des points d'ancrage des rayons par la mise en place de panneaux de renfort,
- l'ébauche est recouverte de nappes de tissu composite pour obtenir la jante finale.

La figure 1 est une vue d'une roue de cycle comportant un élément de jante.
La figure 2 est une vue de coté de l'élément de la jante de la figure 1.
La figure 3 est une vue en perspective de la jante avant l'assemblage.
La figure 4 est une vue en coupe d'une jante.
Les figures 5a, 5b, 5c, sont des vues en coupe d'élément de jante.
La figure 6 est une vue en coupe d'une jante.
La figure 7 est une vue en coupe d'une jante.
La figure 8 est une vue de coté d'une jante.
Les figures 9, 10 et 11 sont respectivement des vues en perspective d'une jante selon un premier, un deuxième et un troisième mode de réalisation de l'invention.
La figure 12 est une vue schématique du procédé d'obtention d'un élément de jante roue selon l'invention.
Les figures 13, 14 et 15 sont des vues représentant des étapes de fabrication supplémentaires et optionnelles d'une jante selon l'invention.
La figure 16 est une vue en perspective d'une jante.
Les figures 17 et 18 sont respectivement des vues en coupe longitudinale de jante selon un mode de réalisation de l'invention.
La figure 19 est une vue schématique selon un mode de réalisation de l'invention.
La figure 20 est une vue en coupe transversale d'une jante selon un mode de réalisation de l'invention.
La figure 21 est une vue schématique montrant une des étapes de fabrication de la jante de la figure 20.
La figure 22 est une vue en coupe transversale d'une jante selon une variante du mode de réalisation de l'invention.

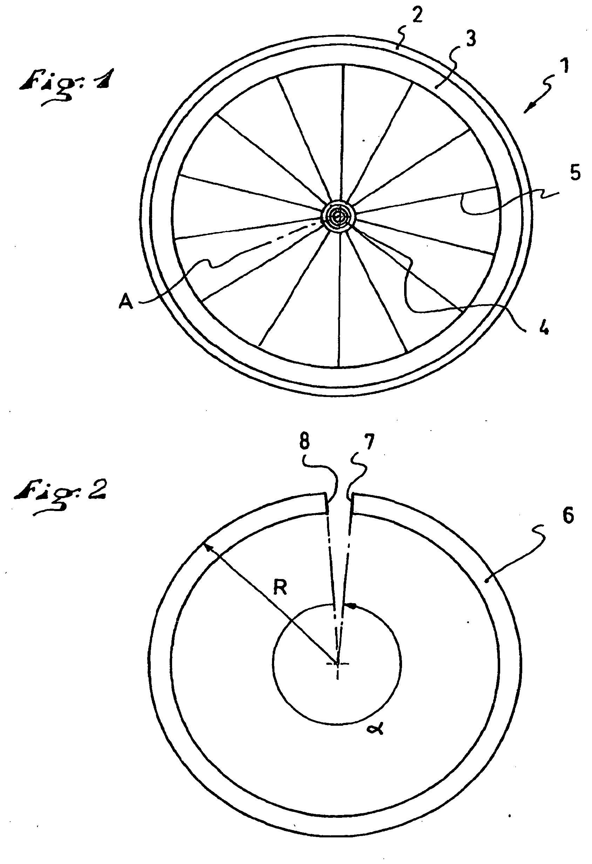

La roue 1 représentée à la figure 1 est destinée à être montée sur une bicyclette et elle est équipée d'un pneumatique 2. Au sens de la présente demande, un pneumatique peut être un pneumatique avec tringles ou bourrelets, destiné à coopérer avec des reliefs correspondant d'une jante, ou un pneumatique tubulaire parfois dénommé « boyau » et collé sur la jante. La roue est dessinée en vue de côté, le plan P de la roue étant le plan du dessin.

La roue 1 comprend une jante 3 dont au moins un élément de forme annulaire est réalisé en matériau composite et un moyeu 4, centré sur l'axe A et destiné à être fixé sur le cadre ou la fourche d'une bicyclette. L'invention s'applique également à des roues et à des jantes pour d'autres moyens de transport qui utilisent des roues similaires à celle d'une bicyclette tels que tricycle, quadricycle, fauteuil roulant, etc....

Des rayons 5 relient le moyeu 4 à la jante 3. Les rayons et le moyeu peuvent être également réalisés en matériau composite ou dans un alliage métallique (acier, aluminium, titane, ...). Au sens de la présente demande, on appelle matériau composite un matériau dans lequel des fibres sont noyés dans une matrice. Un exemple de matériau composite est réalisé par le drapage de pièces de filaments tissés imprégnés de résine époxy, chaque filament étant constitué de fibres de carbone.

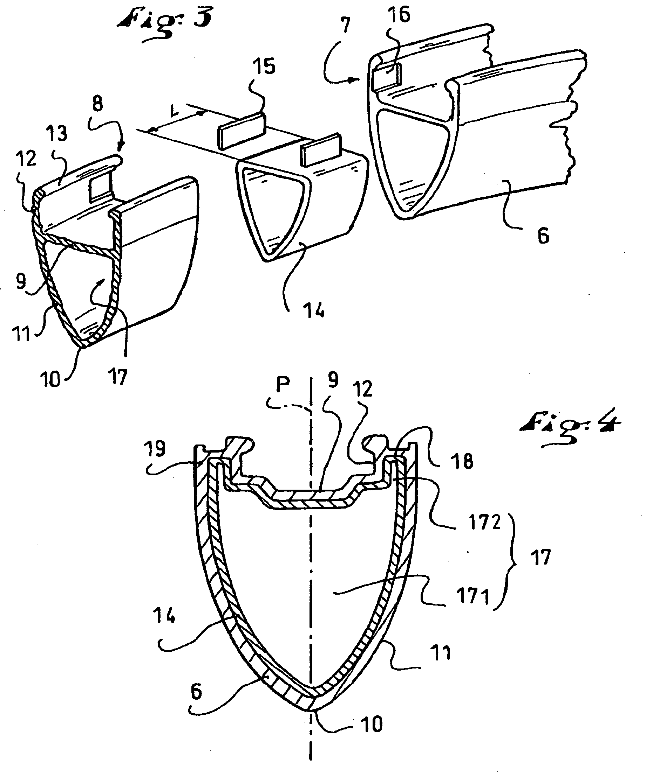

La figure 2 représente l'ébauche 6 de la jante 3. Cette ébauche correspond à un tronçon de solide de révolution d'axe A, l'axe A étant l'axe de rotation de la roue finale. La section de la jante selon un axe contenant l'axe A correspond au profil final de la jante et sera décrit en détail en référence à la figure 3. Le rayon de courbure R de l'ébauche correspond à la moitié du diamètre final normalisé de la jante.

L'ébauche de jante est réalisée en une seule partie en matériau composite et comporte une première extrémité 7 et une deuxième extrémité 8. Entre ces deux extrémités, l'ébauche 6 constitue un tronçon angulaire d'angle =360°. Pour des raisons de clarté du dessin, les deux extrémités 7 et 8 ont été écartées l'une de l'autre à la figure 1.

Dans une variante non représentée, l'angle α est légèrement inférieur à 360°, notamment compris entre 350° et 360°. Dans cette variante, chacune des extrémités 7 et 8 de l'ébauche 6 sera mise au contact d'un insert ayant le même profil que l'ébauche.

La figure 3 montre, dans une vue en perspective éclatée, les différents éléments qui permettent d'assembler la jante 3.

Le profil de l'ébauche 6 est celui de la jante finale. Il est constitué d'un pont supérieur 9, d'un pont inférieur 10 reliés l'un avec l'autre par deux faces latérales 11. Les flancs 12 prolongent les faces latérales au-delà du pont supérieur jusqu'aux crochets 13 prévus pour retenir les talons du pneumatique. L'ébauche a été préalablement coupée à ses deux extrémités 7 et 8 de telle façon la longueur totale de la périphérie de l'ébauche à la base des flanc 12 coté interne (surface d'appui des talon du pneu) soit une des valeurs préconisées par la norme ETRTO, par exemple 622 mm.

Un manchon 14 est également préalablement préparé. De préférence, ce manchon 14 est une structure creuse faite en matériau composite. Le manchon présente une section de profil extérieure identique au profil en section intérieur du corps creux 17 défini par les ponts inférieur et supérieur et les faces latérales. De préférence, le manchon 14 présente une courbure équivalente au rayon de courbure de la jante, R.

La longueur L du manchon est relativement petite en comparaison avec la longueur de la circonférence de l'ébauche qui elle est de l'ordre de 2 m. En pratique, la longueur du manchon pourra être comprise entre 10 et 100 mm. Compte tenu de la petite longueur du manchon, et si la matière utilisée pour la réalisation du manchon présente une certaine élasticité, on pourra utiliser un manchon droit, c'est-à-dire ne présentant pas de courbure.

Dans le cas où le manchon est réalisé en matériau composite, il sera avantageux de le fabriquer par pultrusion. On pourra cependant réaliser ce manchon dans un matériau différent et/ou de tout autre matière.

La préparation préalable de l'ébauche comprend également l'usinage de logement 16 dans les faces internes des flancs 12. Les dimensions de ces logements sont prévues pour que des renforts supplémentaires 15 puissent s'encastrer et être affleurant avec la surface de la face interne des flancs 12.

Le manchon 14, les renforts 15 et la colle qui vont être utilisés constituent l'ensemble des moyens d'assemblage de l'ébauche 6.

Une fois que l'ébauche 6, le manchon 14 et les renforts 15 sont préparés, on procède à l'assemblage de la jante 3. Le manchon 14 est inséré et collé dans la première extrémité 7 puis il est inséré et collé dans la deuxième extrémité 8 de telle façon que les surfaces frontales des deux extrémités 7 et 8 soient en contact l'une avec l'autre. Des moyens d'outillage, non représentés, sont utilisés pour maintenir en place les deux extrémités 7 et 8 et en garantir l'alignement.

L'assemblage réalisé par le manchon 14 permet des surfaces de fixation relativement importantes qui assurent une très bonne cohésion entre les deux extrémités de ébauche. Par exemple, pour une jante dont la circonférence interne du caisson creux est de 80 mm et un manchon de 40 mm de longueur, on dispose d'une surface de contact de 1600 mm² pour chacune des extrémités. En tout état de cause, que l'assemblage soit réalisé par manchonnage collé, co-stratifié (décrit ci-dessous) ou par goupillage, la tenue à la traction des deux extrémités l'une par rapport à l'autre sera supérieure à 100 MPa.

Les renforts 15 sont ensuite mis en place dans leur logement par collage. Ils assurent la rigidité de la jonction entre la partie du flanc 12 issue de la première extrémité 7 de l'ébauche 6 et celle issue de la deuxième extrémité 8.

Dans des variantes non représentées, des renforts supplémentaires sont également mise en place sur les faces externes des flancs 12 ou encore exclusivement sur celles-ci.

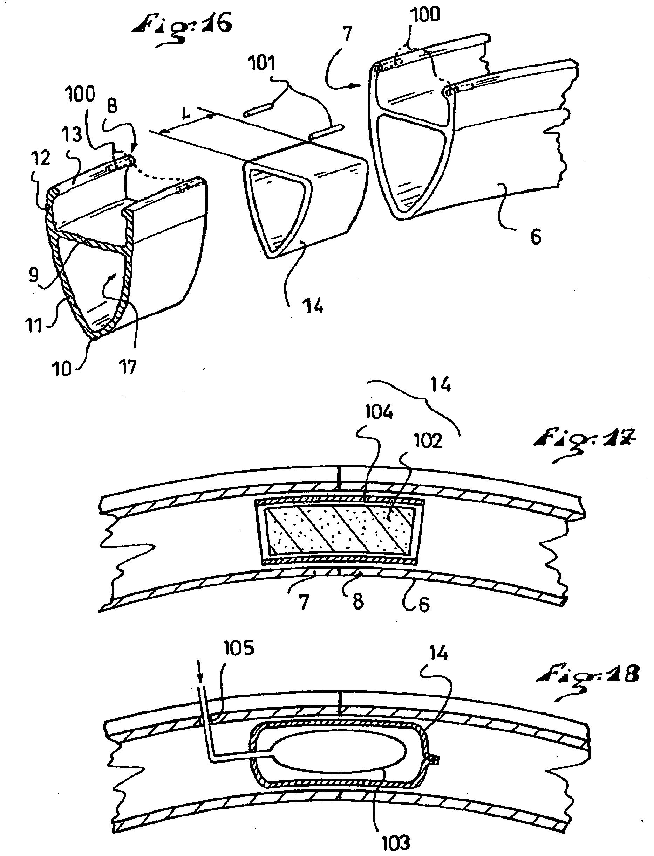

La figure 16 montre une variante du mode de la figure 3. Dans cette variante, comme pour la jante décrite en référence à la figure 3, le profil de l'ébauche 6 est celui de la jante finale. La préparation de l'ébauche avant l'assemblage comprend une étape de réalisation de trous 100 dans les crochets 13. De préférence, ces trous 100 sont percés dans les fibres unidirectionnelles qui se trouvent dans les crochets.

Lors de l'assemblage des deux extrémités de l'ébauche 6, on utilise un manchon 14 identique à celui décrit plus haut et des goupilles 101 pour la partie haute de la jante. Les goupilles 101 sont collées dans les trous 100. Elles peuvent être métalliques (aluminium, titane, acier, ...) ou composites (carbone epoxy, verre epoxy,...). Dans le cas où les goupilles sont en matériau composite, elles seront de préférence réalisées à partir de fibres unidirectionnelles.

La solution décrite à la figure 16 permet d'assurer une continuité mécanique au niveau des crochets sans surépaisseurs sur les faces internes (en contact avec le pneu) ni sur les faces externe (au niveau de la zone de freinage).

La figure 4 montre en coupe une jante. Pour des raisons de simplicité, tous les éléments de cette jante qui sont similaire à ceux décrit dans le cadre du premier exemple porteront le même numéro de référence et pourront ne pas être expressément repris sur la figure 4.

La coupe est réalisée selon un plan perpendiculaire au plan P de la roue et passant par l'axe A de celle-ci, le plan de coupe passant à proximité de la jonction entre les deux extrémités 7 et 8 de l'ébauche 6. Il est ainsi possible de visualiser le profil de l'ébauche 6 et celui du manchon 14. Comme dans le premier exemple, le profil de l'ébauche 6 est constitué par un pont inférieur 10, un pont supérieur 9, des faces latérales 11 et des flancs 12. Cependant dans ce cas, il se caractérise par la forme du corps creux 17. Ce-dernier comprend une portion basse 171 qui comme dans le mode de réalisation précédent se trouve en regard des faces latérales 11 et de deux portions latérales hautes 172, qui se trouvent en regard des flancs 12. Etant donné que les faces latérales 11 montent plus haut que le pont supérieur 9, ils sont connectés directement aux flancs 12 par l'intermédiaire d'un plateau 18. L'espace creux défini entre la partie haute de la face latérale 11 et le flanc 12, c'est à dire la portion latérale haute 172 est contigüe avec le reste du corps creux, c'est-à-dire la portion basse 171.

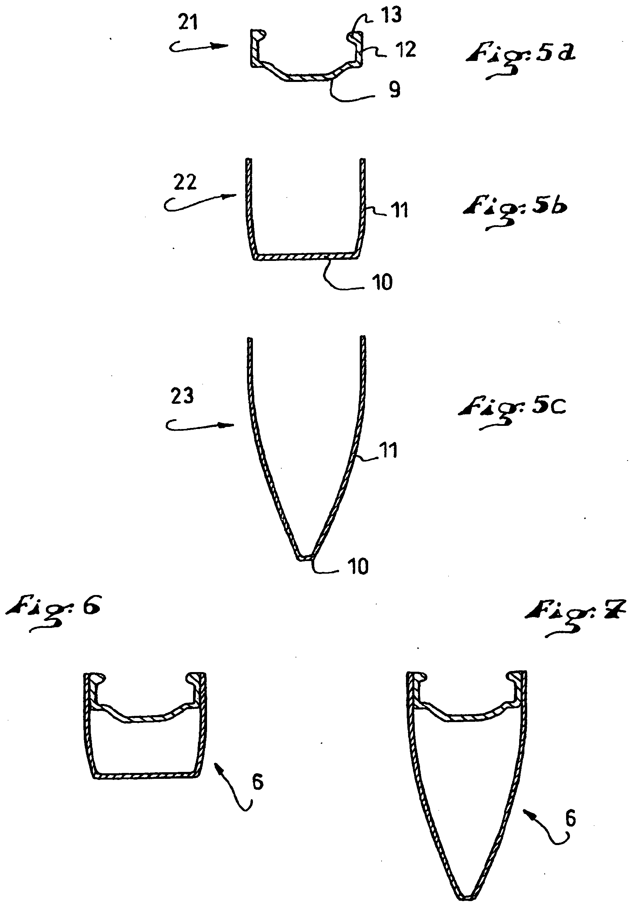

Les figures 5a, 5b, 5c, sont des vues en coupe d'élément de jante.

Ces éléments peuvent être combinés les uns avec les autres ou complétés avec d'autres composants afin de produire une ébauche 6 de jante. Les deux extrémités 7 et 8 de cette-dernière sont, ensuite jointe l'une avec l'autre de manière à finaliser la jante comme cela est décrit en référence à la figure 3.

Conformément à l'invention chacun des ces éléments correspond à un tronçon de solide de révolution d'axe A, lequel constitue, entre ses deux extrémités, un tronçon angulaire d'angle α =360°.

A la figure 5a, le premier élément 21 présente un profil comportant un pont supérieur 9, deux flancs 12 au bout desquels se trouvent des crochets 13.

A la figure 5b, respectivement à la figure 5c, le deuxième élément 22, respectivement le troisième élément 23, présente un profil comportant un pont inférieur 10 et deux faces latérales 11.

Les éléments représentés aux figures 5a, 5b et 5c peuvent être associé à des portions de jantes qui ne sont pas obtenus par pultrusion courbe afin de réaliser une jante selon l'invention. Par exemple, on peut associer le troisième élément montré à la figure 5c avec une portion de jante en aluminium obtenue à partir d'un profilé extrudé, cintré puis soudé. On peut également combiner ensemble différents éléments obtenus par pultrusion comme on va le voir ci-dessous.

La figure 6 décrit un exemple, dans lequel l'ébauche 6 est constituée par l'assemblage du premier élément 21 de la figure 5a avec le deuxième élément 22 de la figure 5b. L'assemblage du premier et du deuxième élément est réalisé par collage de telle façon que le sous ensemble ainsi obtenu soit configuré comme l'ébauche décrite à la figure 2, c'est-à-dire de telle façon qu'elle présente une première et une deuxième extrémité 7 et 8 que sépare l'arc angulaire de 360° constitué par le corps de l'ébauche 6. Les deux extrémités sont alors jointes comme cela a été décrit plus haut pour obtenir la jante finale. On réalise par l'assemblage du premier et du deuxième élément 21 et 22, une jante dite « jante basse ».

La figure 7 décrit un exemple, dans lequel l'ébauche 6 est constituée par l'assemblage du premier élément 21 de la figure 5a avec le troisième élément 23 de la figure 5c. Après que les deux extrémités 7 et 8 de l'ébauche ainsi obtenue aient été jointes comme décrit plus haut, on réalise une jante dite « jante haute ».

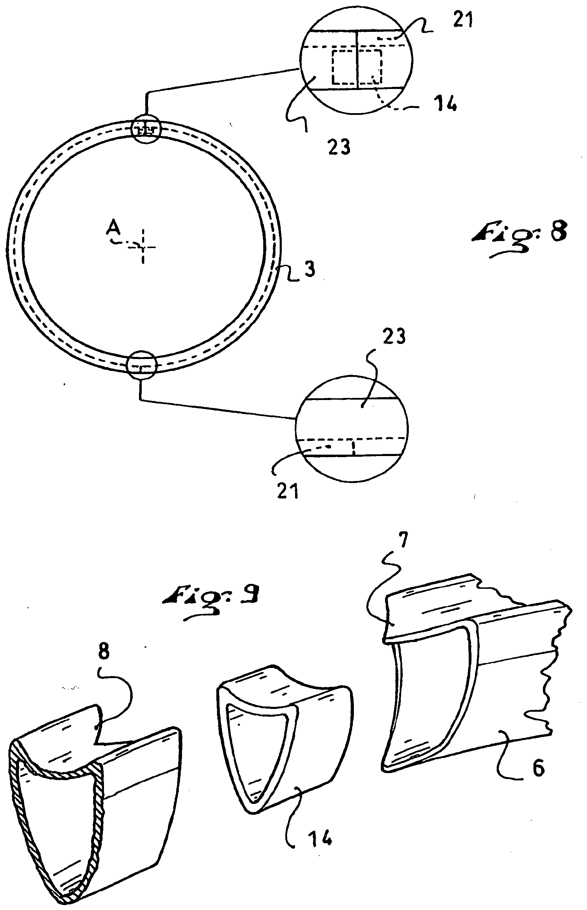

La figure 8 décrit un exemple, dans lequel la jante est comme celle du quatrième mode de réalisation de l'invention, obtenue par l'assemblage du premier élément 21 de la figure 5a avec le troisième élément 23 de la figure 5c. En plus des étapes de réalisation du premier élément 21 et du troisième élément 23, la méthode de réalisation de la jante selon le cinquième mode de réalisation de l'invention comprend une étape de raccordement des deux extrémités du troisième élément 23 de façon à réaliser une jante partielle fermée. Cette étape de raccordement du troisième élément 23 est réalisée d'une manière similaire à celles décrites plus haut en référence au renfort 15 et/ou au manchon 14.

L'étape suivante consiste à venir placer à l'intérieur de la jante partielle fermée, obtenue à l'étape précédente, le premier élément 21, à raccorder les deux extrémités de ce-dernier de telle façon que le plan de jointure des deux extrémités du premier élément 21 ne se confonde pas avec le plan de jointure des deux extrémités du troisième élément 23 et à coller l'ensemble. Dans cette dernière étape, il n'est pas nécessaire de placer des renforts similaires aux renforts 15 prévus dans les modes de réalisation précédents pour assurer une parfaite jointure entre les deux extrémités au niveau des flancs 12 car cette fonction est déjà assurée par le troisième élément 23. En effet, au niveau de la jointure des extrémités du premier élément 21, le troisième élément 23 est continu.

Dans le mode de réalisation décrit à la figure 8, les plans de jointure du premier et du troisième élément sont diamétralement opposés. Ils pourraient également être simplement décalés de quelques degrés et être diamétralement opposés à l'emplacement prévu pour la valve de gonflage du pneumatique.

La figure 9 montre l'assemblage d'une ébauche 6 pour la réalisation d'une jante selon un premier mode de réalisation de l'invention. Il s'agit d'une jante prévue pour recevoir un boyau pneumatique. La première extrémité 7 de l'ébauche 6 est tronçonnée dans une direction perpendiculaire à l'axe A selon un profil de chevron convexe. La deuxième extrémité 8 est, quant à elle, tronçonnée de manière similaire selon un profil de chevron concave directement complémentaire de celui de la première extrémité. Les deux extrémités 7 et 8 peuvent parfaitement s'emboîter et un manchon 14 similaire au manchon décrit en référence avec la figure 3 complète l'assemblage. Dans ce mode de réalisation la liaison entre les deux extrémités 7 et 8 est particulièrement résistante, notamment aux efforts latéraux.

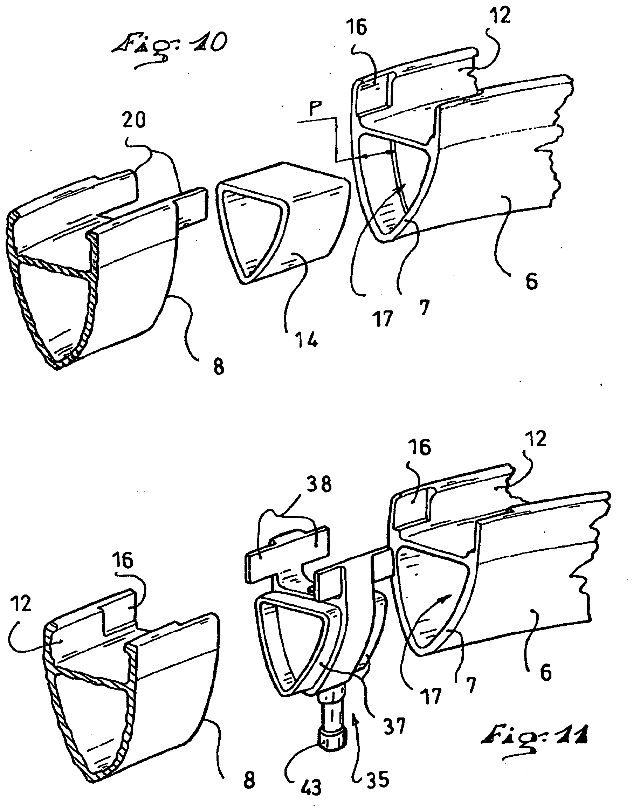

La figure 10 montre l'assemblage d'une ébauche 6 pour la réalisation d'une jante selon un deuxième mode de réalisation de l'invention. Il s'agit d'une jante prévue pour le montage d'un pneumatique à tringle. Dans ce mode de réalisation, les deux extrémités 7 et 8 sont tronçonnées selon un plan perpendiculaire à l'axe A. L'angle α, correspondant à l'amplitude angulaire de l'ébauche 6 entre la première et la deuxième extrémité 7 et 8 est légèrement supérieur à 360°.

La première extrémité 7 est usinée au niveau de la face intérieure des flancs 12 de façon à ménager des logements 16. La deuxième extrémité 8 est également usinée dans toute sa surface frontale, sauf au niveau de la face intérieure des flancs 12 de manière à constituer deux languettes 20 faisant saillie depuis la deuxième extrémités 8. Les deux languettes 20 sont de forme complémentaire des logements 16 et sont prévus pour s'emboîter dans ceux-ci Une fois que les deux extrémités 7 et 8 sont usinées, l'extension angulaire de l'ébauche 6, sans tenir compte des languettes 20, a une valeur de 360°. L'assemblage est complété par un manchon 14 qui de manière similaire à ce qui a été décrit en référence aux figures précédentes est inséré dans le corps creux 17 des deux extrémités 7 et 8.

Dans une variante non représenté du deuxième mode de réalisation de l'invention, l'usinage de la première extrémité 7 ne se limite pas à la création de logement 16 dans la face intérieure des flancs 12, mais comprend également l'usinage d'un logement périphérique sur toute la face interne du corps creux 17 sur une profondeur « p » de quelques millimètres à quelques dizaines de millimètres. De manière complémentaire, la deuxième extrémité 8 est usinée de telle façon que, non seulement des languettes 20 fassent saillie depuis les flancs 12, mais également pour qu'un collier prolonge la partie intérieure du pont supérieur 9, du pont inférieur 10 et des faces latérales 11. Le collier est prévu pour s'insérer dans le logement périphérique ménagé à la première extrémité 7. Dans cette variante, le manchon pas plus des renforts supplémentaires ne sont nécessaires.

La figure 11 montre l'assemblage d'une ébauche 6 pour la réalisation d'une jante selon un troisième mode de réalisation de l'invention. Il s'agit d'une jante prévue pour le montage d'un pneumatique à tringle. Dans ce mode de réalisation, les deux extrémités 7 et 8 sont tronçonnées selon un plan perpendiculaire à l'axe A. L'angle α, correspondant à l'amplitude angulaire de l'ébauche 6 entre la première et la deuxième extrémité 7 et 8 est légèrement inférieur à 360°, tout en étant supérieur à 350°.

La première extrémité 7 et la deuxième extrémité 8 sont usinées au niveau de la face intérieure des flancs 12 de façon à ménager des logements 16.

Préalablement à l'assemblage, une pièce intermédiaire 35 est préparée. Cette pièce est réalisée de préférence en carbone ou dans une matière plastique ou composite compatible pour le collage avec l'ébauche 6. Cette pièce comprend une partie centrale 36 ayant rigoureusement le même contour extérieur que la section de l'ébauche 6. Cette partie centrale 36 est destinée à s'intercaler entre la première et la deuxième extrémité de ébauche. La pièce intermédiaire comprend également deux colliers 37 et quatre languettes 38. Les languettes 38 s'insèrent dans les logements 16 ménagées dans la face interne des flancs 12 et sont collés afin de garantir l'assemblage au niveau des flancs 12. Le contour extérieur des colliers est identique au contour intérieur des corps creux 17 et y sont collés. Dans le mode de réalisation décrit la pièce intermédiaire 35 est le siège de la valve 43 de gonflage du pneumatique.

La figure 17 montre un mode de réalisation de l'invention. L'ébauche 6 est d'abord réalisée par pultrusion puis tronçonnée à la dimension voulue. Le manchon 14 servant à l'assemblage des deux extrémités 7 et 8 de l'ébauche 6 est constitué par un noyau 102 en mousse expansible enveloppé dans une enveloppe 104 de tissus carbone pré-imprégnés de résine. Le manchon 14 est placé dans l'ébauche 6 avant le cycle de cuisson dans la position montrée à la figure 17. Les deux extrémités 7 et 8 sont mises en contact l'une avec l'autre et maintenues pendant toute la cuisson. Sous l'effet de la chaleur, la mousse s'expanse et applique la pression de stratification du pré-imprégné de l'enveloppe 104 contre l'intérieur du profil pultrudé.

La figure 18 montre un mode de réalisation de l'invention. De manière semblable à celle mise en oeuvre pour le neuvième mode de réalisation, le manchon comprend une enveloppe 104 constitué de tissus carbone pré-imprégnés de résine. La pression de stratification étant exercée par l'intermédiaire d'une vessie gonflable 103 à laquelle est associée une canule 105. La canule, non extensible, permet l'alimentation de la vessie 103 depuis l'extérieur de la jante.

Dans les précédents modes de réalisation de l'invention, on parlera de co-stratification partielle, car en même temps que l'enveloppe 104 du manchon 14 est stratifiée et devient un élément structurel, alors que en temps que pré-imprégné elle n'a aucune rigidité, elle est solidairement fixée aux faces internes du profilé pultrudé. La co-stratification du manchon est préférable à la stratification du manchon et de l'assemblage de l'ébauche en plusieurs étapes. En effet, cela permet d'optimiser et de diminuer les quantités de résine et de réduire au minimum la zone d'interface entre le manchon et le profilé pultrudé. De plus, cela rend inutile l'utilisation de colle supplémentaire.

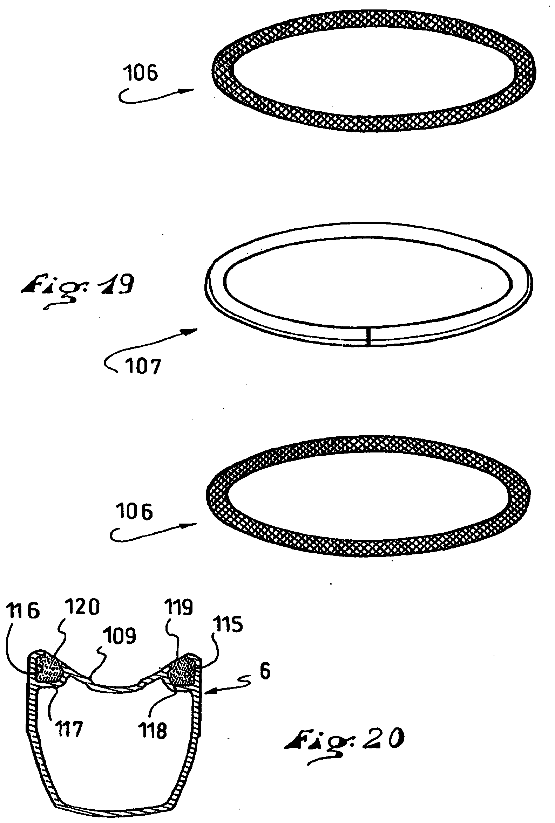

La figure 19 montre un mode de réalisation de l'invention. Dans ce mode de réalisation on réalise d'abord une ébauche 6, sous forme d'un profilé pultrudé creux. Ce profilé peut être réalisé en carbone. Cette ébauche a des parois fines, ne présentant pas des caractéristiques mécaniques suffisantes pour constituer à elle seule une jante de roue de vélo. Les deux extrémités de l'ébauche sont assemblées selon l'une des méthodes décrite ci-dessus de façon à réaliser un anneau fermé 107. L'anneau fermé 107 est utilisé pour la fabrication de la jante finale selon le procédé de drapage de nappes 106 de tissus carbone pré-imprégnés autour de l'anneau fermé. Le cycle de cuisson réalisera la co-stratification partielle des nappes de tissu sur l'anneau fermé 107. Ainsi la jante finale sera constituée d'une part par un premier élément, le noyau pultrudé, et une peau structurelle enveloppant ledit noyau et constituant par exemple la partie haute de la jante (crochet, fond de jante). Cette méthode de fabrication permet améliore grandement les méthodes actuelle de fabrication de jante par drapage de tissu pré-imprégnés car le noyau autour duquel on vient draper les nappes est constitué par un élément qui présentes les même caractéristiques mécaniques que les nappes. D'autres variantes du onzième mode de réalisation sont envisageables. On pourra par exemple réaliser par pultrusion un premier élément puis assembler par manchonnage ce premier élément de façon à constituer la partie haute, respectivement la partie basse, de la jante. Ensuite, on réalisera par drapage la partie basse, respectivement la partie haute.

La figure 20 montre un mode de réalisation de l'invention. L'ébauche 6 est réalisée par pultrusion et ses deux extrémités sont assemblées d'une des manières décrites ci-dessus pour obtenir un cerceau fermé. Au niveau du pont supérieur, le profil du cerceau forme deux rainures 115 et 116 qui se trouvent le long des bords du pont supérieur et qui ont une ouverture orientée vers extérieur. Les rainures définissent deux volumes annulaires qui sont inclus dans le volume hors tout défini par le caisson du cerceau et qui sont en retrait selon une direction radiale par rapport au pneumatique. Par exemple, comme on peut le voir à la figure 20, la paroi du cerceau qui forme le pont supérieur 109 est interrompue à proximité des parois latérales, et elle est prolongée par deux parois de raccordement 117 et 118 qui rejoignent les parois latérales en retrait par rapport au sommet de ces parois. Ainsi les parois de raccordement et les parties supérieures des parois latérales délimitent les deux rainures.

Les deux rainures 115, 116 sont comblées avec deux bobinages 119 et 120. Les bobinages sont formés par des enroulements d'une fibre continue par exemple une fibre de verre de carbone ou d'aramide qui est noyée dans une matrice de résine. Les fibres sont formées par exemple par des mèches de filaments de carbone continus. Elle peut comprendre entre plusieurs dizaines et plusieurs milliers de filaments. La fibre peut être formée par une multitude de fils craqués, c'est-à-dire de fils élémentaires ayant une longueur de quelques centimètres qui sont enchevêtrés les uns avec les autres à la manière d'une corde. La fibre peut également être formée par une tresse où tous les filaments sont orientés selon une direction proche de la direction longitudinale définie par la fibre.

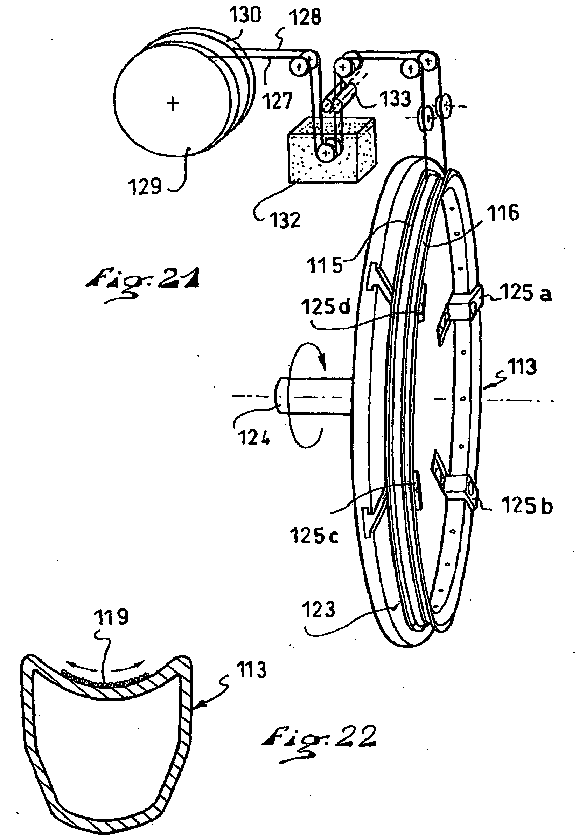

La figure 21 illustre de façon schématique un mode de réalisation des bobinages 119 et 120. Selon ce mode de réalisation, le cerceau 113 est monté sur un plateau 123 qui est mobile en rotation par l'intermédiaire d'un arbre 124. Par exemple le cerceau est immobilisé sur le plateau à l'aide de taquets 125a, 125b, 125c, 125d qui sont mobiles selon des directions radiales par rapport à l'axe de l'arbre. Deux brins de fibre 127 et 128 sont tirés depuis des rouleaux d'alimentation 129 et 130. Les brins sont détournés par exemple à l'aide de galets de renvoi dans une cuve 132 remplie de résine de façon à les imprégner de résine, puis ils sont guidés de nouveau par des galets de renvoi pour être présentés respectivement dans le plan de chacune des rainures. En sortie de la cuve on peut prévoir un dispositif d'essorage 133, par exemple deux rouleaux pressés l'un contre l'autre pour évacuer un excédent éventuel de résine. Les fibres sont de préférence sous tension de façon à compacter les fibres et la résine. Tout moyen approprié convient pour maintenir cette tension. Et c'est pour former les bobinages sous tension que les rainures sont ici ouvertes vers l'extérieur. Pour réaliser les bobinages on immobilise le cerceau sur le plateau, on attache l'extrémité des fibres au cerceau, par tout moyen approprié. Par exemple on colle les extrémités au fond des rainures à l'aide d'un adhésif, ou bien on enfile les extrémités dans un trou ou une fente prévue à cet effet sur le cerceau, d'autres moyens peuvent aussi être utilisés. Une fois que les extrémités des fils sont accrochées au cerceau on entraîne le plateau en rotation pour réaliser les bobinages 120 et 121. Une fois les bobinages réalisés les fibres sont coupées et les extrémités sont arrêtées par tout moyen approprié, par exemple un adhésif. Ensuite la résine polymérise. Selon la nature de la résine utilisée, la polymérisation se fait à température ambiante ou bien elle est accélérée par un chauffage externe. La chaleur peut être apportée par tout moyen approprié, par exemple le cerceau de la jante peut être chauffé avant l'opération de bobinage, ou bien on peut utiliser des rampes de chauffage infrarouge ou encore on peut réaliser une cuisson dans un four. De préférence au cours de la polymérisation de la résine on maintient la jante dans un mouvement de rotation pour éviter une concentration locale de résine sous l'effet de la gravité.

Des opérations de finition de la jante comme différents usinages sont possibles. D'autre part, de nombreuses variantes sont possibles. Au lieu de fibres enduites de résine par voie humide on pourrait utiliser des fibres comprenant un mélange de fibres sèches et de fibres de matière thermoplastique que l'on réchauffe en sortie du rouleau d'alimentation, ou encore des fibres pré-imprégnées de résine polymérisée dont la réaction de polymérisation est bloquée par une conservation à basse température.

La figure 22 montre une variante de réalisation dans laquelle le bobinage 119 est placé sur le fond de jante 121.

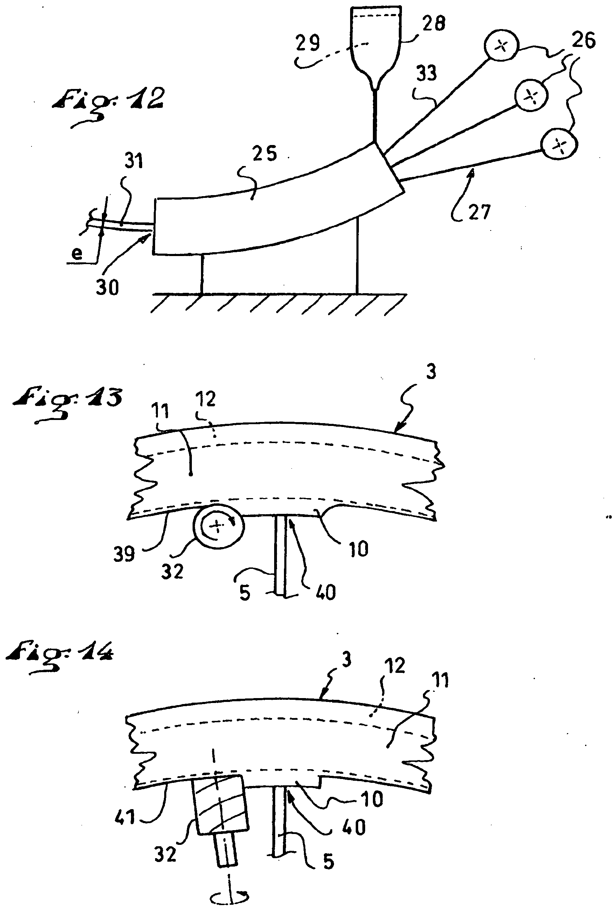

La figure 12 montre schématiquement le procédé d'obtention de l'ébauche 6 d'une jante selon l'invention. La machine de pultrusion 25 est alimentée d'une part par une ou plusieurs nappes de tissus 27 et d'autre part, par de la résine 29. La machine peut également être alimentée par nappes non tissées, par des fils 33 ou des fibres. Les nappes de tissus 27 ainsi que les fils 33 sont dévidés depuis des bobines 26 tandis que la résine est alimentée depuis le réservoir 28. Les tissus, nappes non-tissées, fils ou fibres sont imprégnés de résine par passage dans un bain ou une chambre d'imprégnation ou par pulvérisation et tirés à travers une filière chauffée qui contrôle la teneur en résine et détermine la forme de la section. Dans le procédé recommandé pour la fabrication d'élément de jante selon l'invention, la filière donne une forme courbée au profil. Le passage dans une zone de filière chauffée provoque la polymérisation de la résine thermodurcissable et donne la forme finale du profilé. Les matériaux utilisés sont le carbone, la fibre de verre ou toute autre fibre.

A la sortie 30 de la machine 25, un flot continu d'un profilé courbé 31 est éjecté de la machine. Le profilé présente une certaine hauteur « e », si bien qu'on ne peut parler d'un seul rayon de courbure pour le profilé 31. On parlera cependant d'un rayon de courbure moyen « r ». Le rayon de courbure moyen du profilé est sensiblement compris en 250 et 340 mm. Dans les modes de réalisation décrits précédemment, le rayon de courbure moyen du profilé, qui correspond au rayon de courbure de la base de la face intérieure des flancs 12, à la jonction avec le pont supérieur 9, est sensiblement égale à 311 mm.

Le profilé 31 est tronçonné à la longueur désirée de façon qu'il constitue entre ses deux extrémités un corps de révolution dont l'extension s'inscrit dans un arc angulaire « α » supérieur à 350°. Ce corps de révolution constitue l'ébauche 6 dont il est question ci-dessus. Dans les modes de réalisation du type de celui décrit en référence à la figure 3, l'angle « α » sera sensiblement égal à 360°. Dans les modes de réalisation du type de celui décrit en référence à la figure 10, l'angle «α» sera sensiblement supérieur à 360° et dans ceux du type de celui décrit en référence à la figure 11, il sera sensiblement inférieur à 360°.

Le procédé de pultrusion d'un profilé courbe suivi du tronçonnage pour la réalisation d'une ébauche de jante est particulièrement intéressant par rapport au procédé actuel d'obtention des jantes de roues de bicyclette en matériau composite, et ce pour plusieurs raisons. Tout d'abord, le procédé d'obtention du profilé courbe est un procédé continu, qui permet une vitesse de réalisation bien plus importante. De plus, lors de l'imprégnation des tissus, laquelle à lieu directement dans la machine de pultrusion, l'excès de résine n'est pas perdu, mais peut être directement recyclé. En outre, les tissus utilisés dans ce procédé, le sont de manière optimale. En effet, contrairement au procédé courant d'obtention de jante en matériau composite, il n'y a pas d'autre perte de tissu que celle due aux différents usinages. Les tissus utilisés lors de la pultrusion courbe, sont le résultat d'un tissage de fils, chacun de ces fils étant constitués d'une multitude de filaments ou de fibres d'une matière telle que le verre ou le carbone. La pultrusion courbe garantie la continuité d'un certain nombre des fils constituant les tissus depuis la première extrémité 7 de l'ébauche 6 jusqu'à la deuxième extrémité 8, c'est-à-dire, sur une longueur comprise entre 1,5 m et 2,5 m et dans le cas des modes de réalisation décrits plus haut, sur une longueur d'environ 2 mètres.

Un autre avantage du procédé d'obtention d'une jante ou d'une portion de jante selon l'invention est la possibilité de réaliser directement des ébauches ayant un caisson creux. Les procédés actuellement connus de réalisation de jantes en matériaux composites ne le permettent que difficilement où à condition d'une dégradation du rapport rigidité/poids.

Dans les différents modes de réalisation de l'invention, pour bénéficier d'une jante ayant le meilleur rapport rigidité/poids possible on limitera l'utilisation de la résine par rapport aux fibres. De préférence à la sortie de la machine 25, les fibres correspondent à au moins 50 % de poids de l'ébauche. Dans le cas d'une ébauche faite avec des fibres de carbone noyées au sein d'une matrice thermodurcissable comme par exemple une résine époxyde, on obtient de bons résultats avec un taux de fibre compris entre 55 % et 75 % de la masse de l'ébauche.

Les figures 13, 14 et 15 décrivent des étapes de fabrication supplémentaires pouvant être rajoutées aux étapes de fabrication qui ont été décrites ci-dessus.

Selon les figures 13 et 14, l'étape supplémentaire consiste en un usinage partiel de la jante de façon à en modifier la géométrie en fonction de caractéristiques finale recherchées. Par exemple pour réduire l'épaisseur dans toutes les zones où une épaisseur et une résistance importantes ne sont pas requises. Cette réduction d'épaisseur peut être effectuée pour réduire l'épaisseur du pont inférieur 10 à l'aide d'une fraise cylindrique à deux faces 32.

A la figure 13, on utilise la périphérie de la fraise 32 pour usiner un allègement progressif 39 du pont inférieur 10 entre les points d'ancrage 40 des rayons 5. Cet usinage peut être effectué avant la fixation des rayons 5. Après cet usinage, l'épaisseur locale des parois de la jante sur laquelle sera fait l'usinage pourra avoir une épaisseur aussi fine que 0,3 mm alors que l'épaisseur des parois non soumis à l'usinage aurait une épaisseur comprise entre 0,8 et 5 mm.

A la figure 14, on utilise la face plane de la fraise 32 pour usiner un allègement à épaulement 41 du pont inférieur 10 entre les points d'ancrage 40 des rayons 5. De tels allégements peuvent être usinés en d'autres endroits sur la jante, notamment sur les faces latérales 11. On peut également envisager l'usinage des faces extérieures des flancs pour apprêter les surfaces de freinage.

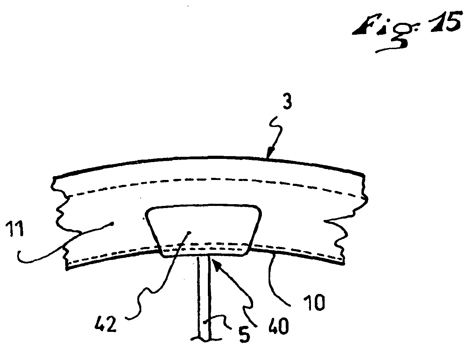

A la figure 15, l'étape supplémentaire consiste à renforcer à l'aide d'un ou de plusieurs pièces de tissu les points d'ancrage 40 des rayons 5. Cette étape autorise la réalisation d'une ébauche à l'épaisseur minimale qui est par la suite renforcée aux endroits où une rigidité importante est requise. Les panneaux de renforts 42 peuvent être apposés sur le pont inférieur 10 et/ou sur les faces latérales 11.

## Revendications

1. Jante (3) pour roue (1) d'axe de rotation A comportant un premier élément (21) ayant la forme d'un tronçon de solide de révolution d'axe A réalisé d'une seule pièce en matériau composite et comportant une première extrémité (7) et une deuxième (8) extrémité distincte l'une de l'autre, **caractérisée en ce que** ledit premier élément (21) constitue, entre la première (7) et la deuxième (8) extrémités, un tronçon de solide de révolution d'arc angulaire supérieur à 350° ; **en ce que** ledit matériau composite composant le premier élément comprend des fibres noyées, les fibres constituant au moins 50 % du poids dudit premier élément ; et **en ce que** la première extrémité (7) et la deuxième extrémité (8) sont usinées de manière complémentaire de façon à permettre leur emboîtement et à réaliser la fermeture de la jante.

2. Jante (3) selon la revendication précédente, **caractérisée en ce que** ledit matériau composite composant le premier élément comprend une matrice thermodurcissable.

3. Jante (3) selon l'une des revendications précédentes, **caractérisée en ce que** ledit élément (21) est réalisé par pultrusion.

4. Jante (3) selon l'une des revendications précédentes, **caractérisée en ce que** les moyens d'assemblage comprennent de la colle.

5. Jante (3) selon l'une des revendications précédentes, **caractérisée en ce qu'**elle comprend une portion de sa section qui est fermée, et **en ce que** les moyens d'assemblage comprennent un manchon (14) inséré dans ladite portion de section fermée.

6. Jante (3) selon l'une des revendications précédentes, **caractérisée en ce que** les moyens d'assemblage comprennent une bande de renfort (15).

7. Jante (3) selon l'une des revendications précédentes, **caractérisée en ce que** les moyens d'assemblage comprennent une goupille (101).

8. Jante (3) selon l'une des revendications précédentes, **caractérisée en ce qu'**elle comprend un deuxième élément (22) ayant la forme d'un tronçon de solide de révolution d'axe A réalisé d'une seule pièce en matériau composite dont une première (7) et une deuxième (8) extrémité distincte l'une de l'autre sont séparées d'un arc angulaire supérieur à 350°.

9. Jante (3) selon l'une des revendications précédentes, **caractérisée en ce qu'**elle comprend un premier élément constituant un noyau réalisée par pultivsion et une peau structurelle recouvrant au moins partiellement ledit noyau.

10. Méthode de fabrication d'une jante (3) comprenant les étapes suivantes :
- Obtention par pultrusion d'au moins un élément ayant la forme d'un tronçon de solide de révolution d'axe A en matériau composite, ledit élément comprenant une première (7) et une deuxième extrémité (8) et constituant entre ces deux extrémités un tronçon de solide de révolution d'arc angulaire supérieur à 350° ;
- Préparation d'une ébauche de jante (6) à partir d'au moins dudit élément, ladite étape de préparation pouvant comprendre des étapes supplémentaires d'usinage ;
- Préparation des moyens d'assemblage des deux extrémités (7, 8) de l'ébauche (6) ;
- Usinage de la première extrémité (7) et la deuxième extrémité (8) de manière complémentaire de façon à permettre leur emboîtement et à réaliser la fermeture de la jante ;
- Assemblage des deux extrémités (7, 8) de d'ébauche (6).

11. Méthode de fabrication selon la revendication précédente, **caractérisée en ce que** l'ébauche (6) comprend un corps creux (17), et **en ce que** l'étape de préparation des moyens d'assemblage comprend la fabrication d'un manchon (14).

12. Méthode de fabrication selon l'une des revendications précédentes, **caractérisée en ce que** l'ébauche (6) comprend deux flancs latéraux (12), et **en ce que** les moyens d'assemblage comprennent des renforts (15).

13. Méthode de fabrication selon l'une des revendications précédentes, **caractérisée en ce que** l'assemblage des deux extrémités est réalisé par collage.

14. Méthode de fabrication selon l'une des revendications précédentes, **caractérisée en ce que** l'assemblage des deux extrémités est réalisé par co-stratification.

15. Méthode de fabrication selon l'une des revendications précédentes, **caractérisée en ce que** l'étape de préparation de l'ébauche (6) comprend une étape d'usinage du pont inférieur (10) dans les zones comprises entre les points d'ancrage des rayons (5).

16. Méthode de fabrication selon l'une des revendications précédentes, **caractérisée en ce que** l'étape de préparation de l'ébauche (6) comprend une étape de renforcement des points d'ancrage des rayons (5) par la mise en place de panneaux de renfort (42).

17. Méthode de fabrication selon l'une des revendications précédentes, **caractérisée en ce que** l'ébauche (6) est recouverte de nappes de tissu composite pour obtenir la jante finale.

## Patentansprüche

1. Felge (3) für ein Rad (1) mit einer Drehachse A, die ein erstes Element (21) in Form eines Drehkörperabschnitts mit einer Achse A enthält, das aus einem Stück aus Verbundmaterial hergestellt ist und ein erstes Ende (7) und ein zweites Ende (8) aufweist, die voneinander getrennt sind, **dadurch gekennzeichnet, dass** das erste Element (21) zwischen dem ersten (7) und dem zweiten Ende (8) einen Drehkörperabschnitt mit einem Winkelbogen größer als 350° bildet; dass das das erste Element bildende Verbundmaterial eingebettete Fasern enthält, wobei die Fasern mindestens 50 % des Gewichts des ersten Elements ausmachen, und dass das erste Ende (7) und das zweite Ende (8) komplementär so bearbeitet sind, dass ihr Ineinanderfügen ermöglicht und die Felge geschlossen wird.

2. Felge (3) nach Anspruch 1, **dadurch gekennzeichnet, dass** das das Element bildende Verbundmaterial eine wärmehärtbare Matrix enthält.

3. Felge (3) nach einem der vorhergehenden Ansprüche, **dadurch gekennzeichnet, dass** das Element (21) durch Pultrusion hergestellt wird.

4. Felge (3) nach einem der vorhergehenden Ansprüche, **dadurch gekennzeichnet, dass** die Zusammenfügungseinrichtungen Klebstoff enthalten.

5. Felge (3) nach einem der vorhergehenden Ansprüche, **dadurch gekennzeichnet, dass** ein Teil von ihr einen geschlossenen Querschnitt hat und dass die Zusammenfügungseinrichtungen eine Muffe (14) enthalten, die in den Teil mit geschlossenem Querschnitt eingefügt ist.

6. Felge (3) nach einem der vorhergehenden Ansprüche, **dadurch gekennzeichnet, dass** die Zusammenfügungseinrichtungen einen Verstärkungsstreifen (15) enthalten.

7. Felge (3) nach einem der vorhergehenden Ansprüche, **dadurch gekennzeichnet, dass** die Zusammenfügungseinrichtungen einen Stift (101) enthalten.

8. Felge (3) nach einem der vorhergehenden Ansprüche, **dadurch gekennzeichnet, dass** sie ein zweites Element (22) enthält, das die Form eines Drehkörperabschnitts mit einer Achse A hat, das aus einem Stück aus Verbundmaterial hergestellt ist, von dem ein erstes (7) und ein zweites Ende (8), die voneinander getrennt sind, um einen Winkelbogen von mehr als 350° getrennt sind.

9. Felge (3) nach einem der vorhergehenden Ansprüche, **dadurch gekennzeichnet, dass** sie ein erstes Element, das einen durch Pultrusion hergestellten Kern bildet, und eine strukturierte Haut enthält, die den Kern zumindest teilweise bedeckt.

10. Verfahren zur Herstellung einer Felge (3), das die folgenden Schritte enthält:
- Erhalt durch Pultrusion mindestens eines Elements, das die Form eines Drehkörperabschnitts mit einer Achse A aus Verbundmaterial hat, wobei das Element ein erstes (7) und ein zweites Ende (8) enthält und zwischen diesen zwei Enden einen Drehkörperabschnitt mit einem Winkelbogen von mehr als 350° bildet;
- Vorbereitung eines Felgenrohlings (6) ausgehend von mindestens dem Element, wobei der Vorbereitungsschritt zusätzliche Bearbeitungsschritte enthalten kann;
- Vorbereitung der Zusammenfügungseinrichtungen der zwei Enden (7, 8) des Rohlings (6);
- Bearbeiten des ersten Endes (7) und des zweiten Endes (8) in einer komplementären Weise, so dass ihr Ineinanderfügen ermöglicht und die Felge geschlossen wird;
- Zusammenfügung der zwei Enden (7, 8) des Rohlings (6).

11. Herstellungsverfahren nach dem vorhergehenden Anspruch, **dadurch gekennzeichnet, dass** der Rohling (6) einen Hohlkörper (17) enthält und dass der Vorbereitungsschritt der Zusammenfügungseinrichtungen die Herstellung einer Muffe (14) enthält.

12. Herstellungsverfahren nach einem der vorhergehenden Ansprüche, **dadurch gekennzeichnet, dass** der Rohling (6) zwei Seitenflanken (12) enthält und dass die Zusammenfügungseinrichtungen Verstärkungen (15) enthalten.

13. Herstellungsverfahren nach einem der vorhergehenden Ansprüche, **dadurch gekennzeichnet, dass** die Zusammenfügung der zwei Enden durch Kleben erfolgt.

14. Herstellungsverfahren nach einem der vorhergehenden Ansprüche, **dadurch gekennzeichnet, dass** die Zusammenfügung der zwei Enden durch Co-Laminierung erfolgt.

15. Herstellungsverfahren nach einem der vorhergehenden Ansprüche, **dadurch gekennzeichnet, dass** der Schritt der Vorbereitung des Rohlings (6) einen Schritt der Bearbeitung der unteren Brücke (10) in den Zonen enthält, die zwischen den Verankerungspunkten der Speichen (5) liegen.

16. Herstellungsverfahren nach einem der vorhergehenden Ansprüche, **dadurch gekennzeichnet, dass** der Vorbereitungsschritt des Rohlings (6) einen Schritt der Verstärkung der Verankerungspunkte der Speichen (5) durch das Anordnen von Verstärkungsplatten (42) enthält.

17. Herstellungsverfahren nach einem der vorhergehenden Ansprüche, **dadurch gekennzeichnet, dass** der Rohling (6) mit Lagen aus Verbundgewebe bedeckt wird, um die endgültige Felge zu erhalten.

## Claims

1. Rim (3) for a wheel (1) having an axis of rotation A and comprising a first element (21) in the form of a section of a solid of revolution of axis A manufactured from composite material as a single part and comprising a first end (7) and a second end (8) which are distinct from one another, **characterized in that** said first element (21) forms, between the first end (7) and the second end (8), a section of a solid of revolution having an angular arc greater than 350°; **in that** said composite material making up the first element comprises embedded fibres, the fibres making up at least 50% of the weight of said first element; and **in that** the first end (7) and the second end (8) are machined in a complementary manner in order that they can fit together and that the rim can be closed.

2. Rim (3) according to Claim 1. **characterized in that** said composite material making up the first element comprises a thermoset matrix.

3. Rim (3) according to either of the preceding claims, **characterized in that** said element (21) is manufactured by pultrusion.

4. Rim (3) according to any one of the preceding claims, **characterized in that** the assembly means comprise adhesive.

5. Rim (3) according to any one of the preceding claims, **characterized in that** it comprises a portion of its cross section which is closed and **in that** the assembly means comprise a sleeve (14) inserted into said closed portion of the cross section.

6. Rim (3) according to any one of the preceding claims, **characterized in that** the assembly means comprise a reinforcing strip (15).

7. Rim (3) according to any one of the preceding claims, **characterized in that** the assembly means comprise a pin (101) .

8. Rim (3) according to any one of the preceding claims, **characterized in that** it comprises a second element (22) in the form of a section of a solid of revolution of axis A manufactured from composite material as a single part, a first end (7) and a second end (8) of which are distinct from one another and are separated by an angular arc greater than 350°.

9. Rim (3) according to any one of the preceding claims, **characterized in that** it comprises a first element which forms a core manufactured by pultrusion and a structural skin at least partially covering said core.

10. Method for manufacturing a rim (3) comprising the following steps:
- obtaining, by pultrusion, at least one element in the form of a section of a solid of revolution of axis A made of composite material, said element comprising a first end (7) and a second end (8) and, between these two ends, forming a section of a solid of revolution having an angular arc greater than 350°;
- preparing a rim preform (6) starting from at least said element, said preparation step possible comprising additional machining steps;
- preparing the means for assembling the two ends (7, 8) of the preform (6);
- machining the first end (7) and the second end (8) in a complementary manner in order that they can fit together and that the rim can be closed;
- assembling the two ends (7,8) of the preform (6).

11. Manufacturing method according to the preceding claim, **characterized in that** the preform (6) comprises a hollow body (17) and **in that** the step of preparing the assembly means comprises the manufacturing of a sleeve (14).

12. Manufacturing method according to any one of the preceding claims, **characterized in that** the preform (6) comprises two lateral flanks (12) and **in that** the assembly means comprise reinforcements (15).

13. Manufacturing method according to any one of the preceding claims, **characterized in that** assembling the two ends is carried out by adhesive bonding.

14. Manufacturing method according to any one of the preceding claims, **characterized in that** assembling the two ends is carried out by colamination.

15. Manufacturing method according to any one of the preceding claims, **characterized in that** the step of preparing the preform (6) comprises a step of machining the lower wall (10) in the areas included between the anchor points for the spokes (5).

16. Manufacturing method according to any one of the preceding claims, **characterized in that** the step of preparing the preform (6) comprises a step of reinforcing the anchor points for the spokes (5) by installing reinforcing panels (42).

17. Manufacturing method according to any one of the preceding claims, **characterized in that** the preform (6) is covered with layers of composite fabric in order to obtain the final rim.
